# DEMANDE DE BREVET EUROPEEN

(11) **EP 1 273 378 A1**
(43) Date de publication de la demande: **08.01.2003**
(21) Numéro de dépôt: 02291516.9
(22) Date de dépôt: 18.06.2002
(51) Int. Cl.: B23K 7/00

(54) **Procédé d'oxycoupage d'une pièce d'acier et dispositif de mise en oeuvre dudit procédé**

(30) Priorité: 02.07.2001 FR 0108730
(71) Demandeur: Prioretti, Guy, 57100 Thionville (FR); Prioretti, Véronique, 57100 Thionville (FR); Prioretti, Jean-Michel, 57100 Manom (FR); Prioretti-Hacking, Françoise, 57100 Thionville (FR)
(72) Inventeur: Prioretti, Guy, 57100 Thionville (FR); Prioretti, Véronique, 57100 Thionville (FR); Prioretti, Jean-Michel, 57100 Manom (FR); Prioretti-Hacking, Françoise, 57100 Thionville (FR)
(74) Mandataire: Jaunez, Xavier

(57) **Abrégé**

L'invention concerne un procédé et un dispositif d'oxycoupage de pièces d'acier, selon lesquels on positionne un organe de coupe (5) sur une face supérieure de la pièce à couper, et des organes d'ébavurage (10) et de pulvérisation (11) sous la pièce à couper, ces derniers organes étant portés par une lame de support qui passe dans la saignée d'oxycoupage.

Conformément à l'invention, on projette, directement dans la saignée d'oxycoupage (1.3) et dans la partie de celle-ci qui est entre le front de saignée et le support en forme de lame des organes d'ébavurage et de pulvérisation, au moins un jet de fluide sous pression (22) formant barrage de protection contre les projections de particules pour ledit support en forme de lame lors de la progression de celui-ci dans la saignée d'oxycoupage (1.3). Ainsi, on supprime le risque d'obstacle pour la progression du support en forme de lame dans la saignée d'oxycoupage, ce qui autorise des vitesses d'oxycoupage très élevées.

## Description

La présente invention concerne un procédé et un dispositif d'oxycoupage de pièces en acier, telles que des brames, des tôles, des billettes et des blooms.

L'arrière-plan technologique est illustré par le document EP-A-0 639416 qui décrit une installation d'oxycoupage à deux lignes, dont chacune comporte un chariot mobile à chalumeau d'oxycoupage de type pendulaire. Le document EP-A-0 235 588 décrit une installation analogue, utilisant un chalumeau principal en mouvement pendulaire au-dessus de la pièce à découper transversalement, et un chalumeau additionnel d'ébavurage du cordon de coupe. Le document DE-U-84 28017 décrit une autre installation d'oxycoupage, qui utilise des buses disposées sous la brame pour chasser horizontalement les projections, et des buses de projection d'eau, également disposées sous la brame, pour le refroidissement d'une plaque anti-érosion.

On pourra également se référer au document US-A-2 820 420 qui décrit un chalumeau d'oxycoupage monté en porte-à-faux sur un chariot déplaçable horizontalement, et au document WO-A-96/20818 qui décrit un pont roulant supportant un bras de travail vertical extensible télescopiquement.

On sait que l'oxycoupage de pièces en acier, et plus spécifiquement en sidérurgie, de brames, de tôles, de billettes et de blooms, génère en général au niveau de la surface de sortie du jet d'oxycoupage la formation de résidus de métal fondu, non brûlé, dont une partie qui n'est pas éjectée dans l'atmosphère ambiante par le jet d'oxycoupage se colle et se fige sur les lèvres de sortie de la saignée de coupe, et ce sur toute la longueur de la saignée, en formant un cordon de coupe en forme de bourrelet. Ces cordons intempestifs adhèrant fortement au corps des pièces oxycoupées, il s'avère nécessaire de prévoir une opération supplémentaire d'enlèvement des cordons qui sont plus ou moins importants suivant les nuances d'acier rencontrées, les vitesses de coupe, les types et les réglages du chalumeau d'oxycoupage. Anciennement, l'enlèvement des cordons de coupe était généralement effectué soit par ébavurage manuel au chalumeau ou au burin, soit encore mécaniquement au moyen d'une machine adaptée.

On a alors proposé de réaliser un ébavurage simultané du cordon de coupe se formant sur la face de la pièce concernée, comme décrit dans le document WO-A-99/16570. Toutefois, cette technique met en oeuvre un jet d'oxycoupage horizontal, de sorte qu'elle est inadaptée à l'oxycoupage de brames ou autres produits de grande largeur. En outre, l'écoulement du métal fondu reste imparfait dans le cas de jets d'oxycoupage horizontaux, de sorte que le détachement des particules constituant le cordon de coupe suppose un jet d'ébavurage très puissant pour être capable de chasser vers le bas les particules en fusion. Enfin, les techniques classiques ne permettent pas d'éviter la présence de fumées importantes dans la zone de sortie du jet d'oxycoupage, ces émissions de fumées étant générées par la post-combustion des résidus de métal fondu non brûlé, éjectés par le jet d'oxycoupage et le jet d'ébavurage.

Les inconvénients précités ont été en grande partie surmontés par un procédé d'oxycoupage dans lequel on déplace en synchronisme d'une part un organe de coupe de façon que le jet d'oxycoupage soit dirigé vers une première face de la pièce pour attaquer ladite pièce selon une direction sensiblement verticale en formant une saignée, et d'autre part un organe d'ébavurage et un organe de pulvérisation de façon que leurs jets respectifs soient dirigés vers une seconde face de la pièce opposée à la première face, en attaquant ladite seconde face selon une direction oblique au niveau de la sortie du jet d'oxycoupage, afin de réaliser une ébavuration simultanée du cordon de coupe se formant sur ladite seconde face et une réduction des émissions de fumées, lesdits organes d'ébavurage et de pulvérisation étant portés par un support en forme de lame passant dans la saignée d'oxycoupage. Le document WO-A-01/28727 de la demanderesse décrit en détail un tel procédé d'oxycoupage, ainsi qu'un dispositif de mise en oeuvre associé. L'utilisation d'un support en forme de lame passant directement dans la saignée d'oxycoupage est très séduisante dans la mesure où tous les composants actifs du dispositif de mise en oeuvre peuvent être disposés au-dessus de la pièce à oxycouper, laissant libre le dégagement en dessous de ladite pièce. On s'est toutefois aperçu que des incidents opératoires, tels qu'une vitesse d'oxycoupage excessive, ou des défauts de métal oxycoupé, tels que des inclusions ou des criques, peuvent engendrer des gerbes de particules constituées d'un mélange d'acier et de scories fondues venant percuter le support en forme de lame à l'intérieur de la saignée d'oxycoupage. Lorsque de tels incidents ou défauts surviennent en cours du processus d'oxycoupage, les particules en gerbes peuvent provoquer une obstruction, et même un blocage, s'opposant à l'avancement normal du support en forme de lame et donc de l'organe d'ébavurage associé. Ceci rend l'opération d'oxycoupage-ébavurage insuffisamment fiable, et tout à fait redhibitoire pour les grandes vitesses d'oxycoupage.

En outre, lorsque les pièces oxycoupées sont des brames venant directement de coulée continue d'aciérie, les températures concernées sont extrêmement élevées (de l'ordre de 1000°C), de sorte que le support en forme de lame supportant l'organe d'ébavurage est soumis à un échauffement très sévère, lequel échauffement peut même devenir rédhibitoire à la poursuite normale du processus d'ébavurage.

L'invention a pour objet un procédé d'oxycoupage d'une pièce en acier et un dispositif de mise en oeuvre de ce procédé, qui soit capable d'effectuer une coupe régulière de pièces d'acier de types très divers, sans présence de cordon de coupe et sans émissions de fumées, et surtout sans risque de blocage de l'avancement de l'organe d'ébavurage dont le support passe dans la saignée d'oxycoupage. Substidiairement, la technique recherchée doit être capable d'oxycouper des pièces en acier venant directement de sortie de coulée continue.

Ce problème est résolu conformément à l'invention grâce à un procédé d'oxycoupage d'une pièce d'acier, dans lequel on déplace en synchronisme d'une part un organe de coupe de façon que le jet d'oxycoupage soit dirigé vers une première face de la pièce pour attaquer ladite face selon une direction sensiblement verticale en formant une saignée, et d'autre part un organe d'ébavurage et un organe de pulvérisation de façon que leurs jets respectifs soient dirigés vers une seconde face de la pièce opposée à la première face, en attaquant ladite seconde face selon une direction oblique au niveau de la sortie du jet d'oxycoupage, afin de réaliser une ébavuration simultanée du cordon de coupe se formant sur ladite seconde face et une réduction des émissions de fumées, lesdits organes d'ébavurage et de pulvérisation étant portés par un support en forme de lame passant dans la saignée d'oxycoupage, ledit procédé étant remarquable en ce que l'on projette, directement dans la saignée d'oxycoupage et dans la partie de celle-ci qui est entre le front de saignée et le support en forme de lame des organes d'ébavurage et de pulvérisation, au moins un jet de fluide sous pression formant barrage de protection contre les projections de particules pour ledit support en forme de lame lors de la progression de celui-ci dans la saignée d'oxycoupage.

Le jet de fluide sous pression ainsi émis directement dans la saignée d'oxycoupage réalise un véritable barrage ou rideau de protection créant une zone protégée dans la saignée d'oxycoupage, et ce sur toute l'épaisseur de la pièce d'acier oxycoupée, en refoulant et éjectant hors de la saignée les particules intempestivement créées par le jet d'oxycoupage. Grâce à la suppression du risque d'obstruction pour le support en forme de lame, on peut envisager des vitesses d'avancement très élevées, au moins égales au double des vitesses d'avancement obtenues avec les techniques d'oxycoupage traditionnelles.

Conformément à un premier mode d'exécution du procédé selon l'invention, au moins un jet de fluide est projeté obliquement vers le front de saignée, et de préférence vers la partie inférieure dudit front de saignée. De préférence alors, le fluide choisi est un fluide d'oxycoupage, en particulier de l'oxygène ou un mélange d'oxygène et de gaz combustible. Le jet de fluide projeté directement dans la saignée d'oxycoupage permet alors en plus de réaliser un oxycoupage additionnel de la partie inférieure du front de saignée et aussi d'apporter un supplément de chauffe favorable à la performance du jet d'oxycoupage vertical, ce qui facilite encore l'avancement du support en forme de lame à l'intérieur de ladite saignée d'oxycoupage.

Conformément à une variante d'exécution, qui peut d'ailleurs être combinée avec le premier mode d'exécution précité, au moins un jet de fluide est projeté vers le support en forme de lame de l'organe d'ébavurage ou vers ledit organe. De préférence alors, le fluide choisi est un fluide de refroidissement, tel que de l'eau ou de l'air comprimé. Le jet de fluide projeté directement dans la saignée d'oxycoupage assure alors une fonction supplémentaire de refroidissement du support en forme de lame, en plus de l'effet protecteur contre les projections de particules. Ceci est particulièrement avantageux dans le cas de l'oxycoupage d'une brame chaude venant directement de coulée continue, pour lequel les régimes de température atteignent couramment 1000°C.

Avantageusement encore, le ou les jets de projection sont émis à partir d'un ou plusieurs organes de projection déplacés horizontalement en synchronisme avec les organes de coupe, d'ébavurage et de pulvérisation, l'ensemble des jets restant dans un même plan vertical.

L'invention concerne également un dispositif de mise en oeuvre du procédé d'oxycoupage précité, le dispositif étant du type comportant un chariot déplaçable horizontalement sur des rails associés en surplombant la pièce à oxycouper, ledit chariot portant un support en forme de lame agencé pour passer dans la saignée d'oxycoupage et supportant inférieurement des organes d'ébavurage et de pulvérisation passant sous ladite pièce, ledit dispositif étant remarquable en ce que le chariot précité supporte également au moins un organe de projection surplombant la pièce à oxycouper et agencé en amont du support en forme de lame par référence au sens de déplacement du chariot porteur pour projeter un jet de fluide sous pression directement dans la saignée d'oxycoupage. On aura compris que le montage des organes d'ébavurage, de pulvérisation, et de projection sur un même chariot garantit un synchronisme parfait pour le déplacement horizontal de ces organes.

De préférence, le chariot porteur porte également un support d'un organe de coupe surplombant la pièce à oxycouper, ledit organe de coupe étant agencé en amont dudit au moins un organe de projection pour projeter un jet d'oxycoupage attaquant verticalement la face supérieure de ladite pièce en formant la saignée d'oxycoupage. Ainsi, l'ensemble des organes de coupe, d'ébavurage, de pulvérisation, et de projection progressent en parfait synchronisme lors du processus d'oxycoupage.

De préférence alors, les supports des différents organes de coupe, d'ébavurage, de pulvérisation et de projection sont agencés de telle façon que l'ensemble des jets émis par lesdits organes restent dans un même plan vertical. Tous ces jets restent alors parfaitement positionnés par rapport au plan vertical médian de la saignée d'oxycoupage.

Avantageusement, le ou les organes de projection de fluide sont réglables en hauteur et/ou en inclinaison.

De préférence alors, le ou les organes de projection sont réglés en position de telle façon que le ou les jets émis soient dirigés soit vers le front de saignée, soit vers le support en forme de lame de l'organe d'ébavurage ou vers ledit organe. En particulier, le ou les organes de projection sont raccordés à des sources de fluides d'oxycoupage pour une projection vers le front de saignée, ou à des sources de fluides de refroidissement pour une projection vers le support en forme de lame de l'organe d'ébavurage ou vers ledit organe.

De préférence encore, le support en forme de lame des organes d'ébavurage et de pulvérisation est rétractable verticalement vers le haut, lesdits organes étant en outre dimensionnés en épaisseur pour pouvoir pénétrer dans la saignée d'oxycoupage. Il est alors possible de rétracter les organes d'ébavurage et de pulvérisation pour les amener dans la saignée d'oxycoupage, et de les effacer ainsi totalement de la face inférieure de la pièce à oxycouper, ce qui permet de franchir des obstacles de parcours situés sous la pièce en acier à oxycouper et surgissant lors de l'avancement du chariot d'oxycoupage. Cette rétraction verticale est naturellement temporaire, et l'ensemble peut être ensuite redescendu en position d'oxycoupage une fois l'obstacle franchi.

On pourra prévoir alors que le support en forme de lame des organes d'ébavurage et de pulvérisation comporte en outre une articulation permettant un pivotement autour d'un axe horizontal amenant les jets d'ébavurage et de pulvérisation dans un plan horizontal une fois que les organes correspondants d'ébavurage et de pulvérisation ont été complètement retirés de la saignée d'oxycoupage. Dans ce cas, on ne se contente pas d'un simple effacement de ces organes à l'intérieur de la saignée d'oxycoupage, mais lesdits organes sont remontés au-dessus de la pièce à oxycouper, puis basculés à 90° pour être amenés dans un plan horizontal. On évite alors les effets négatifs du jet d'ébavurage à l'intérieur de la saignée d'oxycoupage lors de l'étape d'effacement partiel pour le franchissement des obstacles importants.

D'autres caractéristiques et avantages de l'invention ressortiront plus clairement à la lumière de la description qui va suivre et du dessin annexé, concernant des modes particuliers de réalisation, en référence aux figures où :
- la figure 1 illustre schématiquement une installation mettant en oeuvre un procédé d'oxycoupage selon l'invention, avec un dispositif de mise en oeuvre ici à chariot unique se déplaçant horizontalement ;
- la figure 2 est une vue schématique illustrant à plus grande échelle les organes utilisés dans le cadre du procédé de l'invention, avec la projection d'un jet de fluide de protection vers le front de saignée ;
- la figure 3 illustre une variante dans laquelle le jet de fluide de protection est projeté vers le support en forme de lame de l'organe d'ébavurage ou vers ledit organe ;
- la figure 4 est une vue en bout des composants illustrés sur les figures 2 et 3, permettant de mieux distinguer le passage du support en forme de lame dans la saignée d'oxycoupage ;
- la figure 5 est une coupe selon V-V de la figure 2, permettant de distinguer les canalisations de passage de fluide à l'intérieur du support en forme de lame mince ;
- la figure 6 est une vue en bout correspondant à la figure 4, mais après relèvement et pivotement des organes d'ébavurage et de pulvérisation pour un effacement complet desdits organes.

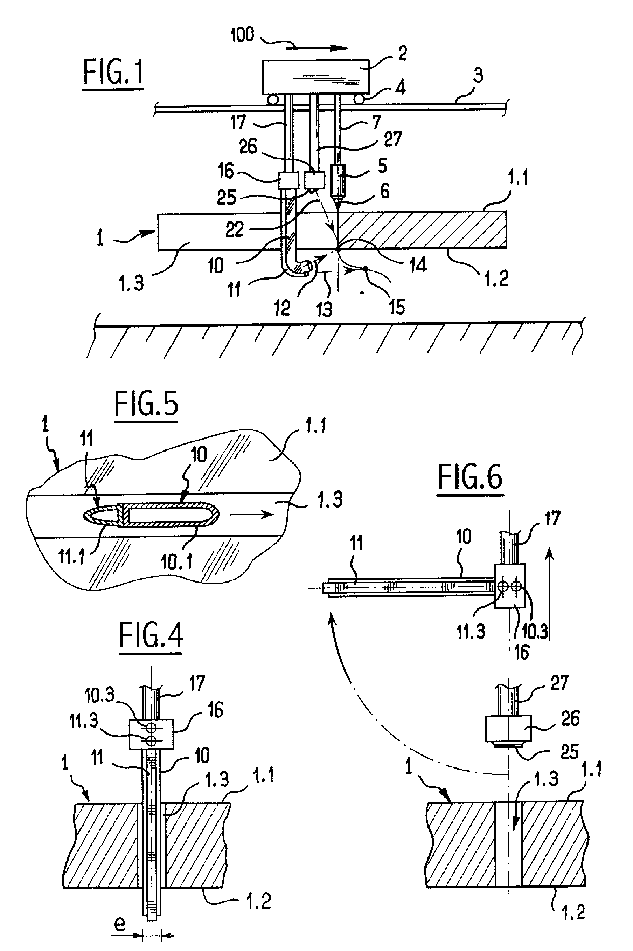

La figure 1 illustre une pièce d'acier 1 telle qu'une brame, billette ou bloom, en train d'être coupée conformément au procédé d'oxycoupage de l'invention. La pièce 1 à oxycouper a par exemple une épaisseur de l'ordre de 200 mm ou plus, et présente une face supérieure 1.1 et une face inférieure opposée 1.2, et elle repose horizontalement sur des appuis non représentés sur la figure. Un chariot 2 peut se déplacer sur des rails 3 au moyen de roulements 4, en surplombant la pièce à oxycouper 1.

Le chariot 2 porte, de façon connue en soi, un organe de coupe 5 qui est un chalumeau d'oxycoupage, au moyen d'un support rigide associé 7, de façon que ledit organe de coupe 5 surplombe la pièce à oxycouper 1. Le chariot 2 porte également, au moyen d'un élément 17, un bloc 16 équipé d'un support en forme de lame agencé pour passer dans la saignée d'oxycoupage et supportant inférieurement des organes d'ébavurage et de pulvérisation passant sous ladite pièce. Sur la figure 1, on a noté 10 l'ensemble d'ébavurage et 11 l'ensemble de pulvérisation.

Sur la figure 1 on distingue également les trois jets émis par les organes précités 5,10,11. Le jet d'oxycoupage 6 est dirigé vers la face supérieure 1.1 de la pièce à oxycouper pour attaquer ladite face selon une direction sensiblement verticale en formant une saignée notée 1.3. L'organe d'ébavurage 10, qui est positionné sous la pièce à oxycouper 1, est positionné de telle façon que le jet d'ébavurage noté 12 attaque la face inférieure 1.2 de la pièce 1 selon une direction oblique restant pointée vers le point de sortie noté 14 du jet d'oxycoupage 6. L'organe de pulvérisation 11 est quant à lui positionné de telle façon que le jet de pulvérisation noté 13 soit émis en direction des particules en fusion éjectées par le jet d'oxycoupage 6, afin de réduire les émissions de fumées. L'agencement des organes de coupe 5, d'ébavurage 10 et de pulvérisation 11 est tel que les trois jets correspondants respectivement 6,12,13, soient contenus dans un même plan vertical tout au long du processus de coupe. Le fluide pulvérisé par l'organe de pulvérisation 11, qui peut être de l'eau ou de l'oxygène, assure une fonction de fluide extincteur au regard des particules incandescentes. Grâce à cette projection de fluide froid sur les particules d'acier en post-combustion en provenance des jets d'oxycoupage et d'ébavurage, on parvient à réduire considérablement le volume des fumées émises. Il est à noter que le jet de pulvérisation 13 est dirigé vers une zone notée 15 qui correspond au sommet de la parabole de chute des particules en fusion. En effet, les particules sont d'abord soumises à l'énergie cinétique des jets d'oxycoupage et d'ébavurage 6,12, et leur trajectoire présente une inflexion à tangente horizontale avant le début d'une trajectoire parabolique correspondant à la seule influence des forces de gravité. Ce point d'inflexion, qui correspond à la zone 15 précitée, constitue ainsi la cible idéale pour le jet de pulvérisation, car les particules ont alors une vitesse sensiblement nulle.

On pourra à ce titre se référer au document WO-A-01/28727 de la demanderesse pour plus d'explications sur cette technique utilisant un ébavurage et une pulvérisation réalisés simultanément à l'oxycoupage.

Conformément à une caractéristique essentielle de l'invention, on projette, directement dans la saignée d'oxycoupage 1.3 et dans la partie de celle-ci qui est entre le front de saignée et le support en forme de lame des organes d'ébavurage et de pulvérisation, au moins un jet de fluide sous pression 22 formant barrage de protection contre les projections de particules pour ledit support en forme de lame lors de la progression de celui-ci dans la saignée d'oxycoupage 1.3. La pression sera de préférence relativement élevée, par exemple de l'ordre de 10⁶ Pascals (10 bars).

En l'espèce, le chariot 2 auquel est déjà dévolu le support de l'organe de coupe 5 et des organes d'ébavurage et de pulvérisation 10,11, porte également un support 27 d'un bloc 26 agencé en surplomb de la pièce à oxycouper 1, ledit bloc 26 comportant au moins un organe de projection 25 agencé en amont du support en forme de lame par référence au sens de déplacement du chariot porteur 2 (flèche 100) pour projeter un jet de fluide sous pression 22 directement dans la saignée d'oxycoupage 1.3. Ce jet de fluide sous pression 22 forme alors un rideau protecteur permettant de protéger le support en forme de lame passant dans la saignée d'oxycoupage contre les particules intempestivement créees par le jet d'oxycoupage 6. Ces particules sont en effet refoulées dans la zone ici triangulaire délimitée par le jet de coupe 6 et le jet de protection 22, et éjectées hors de la saignée d'oxycoupage 1.3 par l'action combinée de ces deux jets.

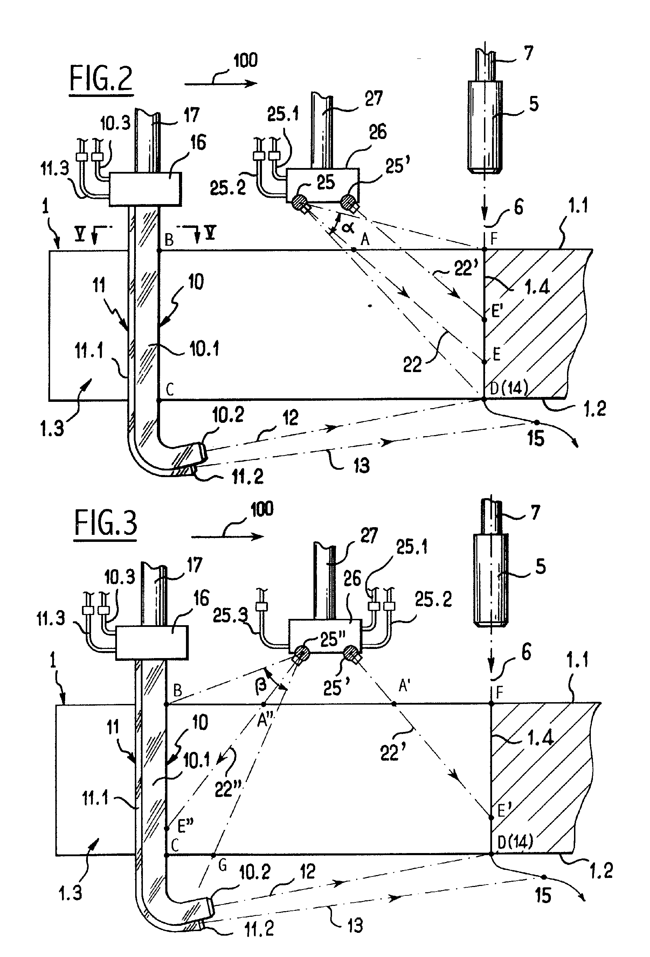

On va maintenant décrire plus en détail les composants principaux de l'installation en se référant aux figures 2 et 3, sur lesquelles on n'a représenté que les organes de coupe, d'ébavurage et de pulvérisation, et de projection en cours de processus d'oxycoupage.

On retrouve l'organe de coupe 5 émettant un jet d'oxycoupage 6 qui attaque la face supérieure 1.1 de la pièce à oxycouper au niveau d'un point noté F. Le jet d'oxycoupage 6 sort au niveau de la face opposée 1.2, en un point 14 noté G. Le segment FD constitue ce que l'on appelle classiquement le front de saignée (noté 1.4). L'organe d'ébavurage 10 comporte une partie support en forme de lame mince notée 10.1, passant dans la saignée d'oxycoupage 1.3, et montée sur le bloc de support 16. La lame mince 10.1 se termine inférieurement par une buse 10.2 conformée pour émettre le jet 12 désiré apte à assurer la fonction d'ébavurage du cordon de coupe, ledit jet étant dirigé vers le point de sortie D. En arrière et en dessous de l'organe d'ébavurage 10, est prévu un organe de pulvérisation 11 comportant une partie en forme de lame 11.1 qui est également dimensionnée pour passer dans la saignée d'oxycoupage 1.3, laquelle partie se termine inférieurement par une buse 11.2 qui est dimensionnée pour la conformation désirée du jet de pulvérisation 13 en direction du point 15 comme expliqué plus haut.

On a également représenté sur la figure 2 les conduites d'alimentation associées aux organes d'ébavurage 10 et de pulvérisation 11, lesquelles conduites sont ici raccordées au bloc de support 16 : on distingue ainsi une conduite 10.3 servant à amener l'oxygène d'ébavurage à l'intérieur du support en forme de lame 10.1 jusqu'à la buse d'éjection 10.2 pour l'ébavurage, et une conduite 11.3 pour l'amenée de fluide de refroidissement et d'extinction des fumées à l'intérieur du support en forme de lame 11.1, jusqu'à la buse d'éjection 11.2. On a noté B et C les points au niveau des bords supérieur et inférieur respectivement du support en forme de lame, au niveau des faces supérieure et inférieure 1.1, 1.2 de la pièce à oxycouper 1. Ainsi, les segments F D et BC délimitent un espace intermédiaire, dans la saignée d'oxycoupage 1.3, qui est précisément l'espace dans lequel on va organiser la projection de fluide pour former un barrage de protection contre les projections de particules, conformément à l'invention.

On retrouve par ailleurs le bloc de support 26 solidaire d'une colonnette 27, et équipé d'au moins un organe de projection surplombant la pièce à oxycouper 1 et agencé en amont du support en forme de lame par référence au sens de déplacement du chariot porteur 2 (flèche 100) pour projeter un jet de fluide sous pression directement dans la saignée d'oxycoupage 1.3.

En l'espèce, un jet de fluide 22 est projeté obliquement, à partir d'un organe de projection 25, vers le front de saignée 1.4, et de préférence vers la partie inférieure dudit front de saignée. Le jet de fluide 22 intercepte le plan de la face supérieure 1.1 de la pièce 1 à oxycouper au niveau d'un point noté A, et ledit jet 22 impacte le front de saignée 1.4 au niveau d'un point noté E. Il va de soi que le jet de protection 22 délivré par l'organe d'éjection 25 sera dirigé de façon à ne pas sortir directement de la saignée 1.3, pour ne pas perturber le jet d'oxygène d'ébavurage. Ainsi, le point E sera de préférence légèrement au-dessus du point D de sortie du jet d'oxycoupage 6.

On pourra naturellement compléter le dispositif en prévoyant au moins un jet de fluide supplémentaire venant frapper en un autre point le front de saignée 1.4. On a ainsi illustré, à titre d'exemple, un organe de projection supplémentaire 25', également porté par le même bloc 26 et la colonnette 27 associée, lequel organe de projection émet un jet de protection noté 22' venant impacter le front de saignée 1.4 au niveau d'un point E'. On a représenté un jet 22' dirigé selon une direction sensiblement parallèle à celle du jet 22, mais il va de soi que l'on pourra choisir une direction d'obliquité différente. D'ailleurs, il sera intéressant de prévoir que les organes de projection 25,25' soient réglables en hauteur et/ou en inclinaison. Ceci permet de cibler parfaitement le point d'arrivée du ou des jets de protection sur le front de saignée 1.4, en fonction des différents produits à oxycouper. Dans la pratique, avec un jet de protection unique 22, le point d'impact E sera compris entre les points D et F, ce qui délimite une plage angulaire d'angle α pour l'inclinaison possible dudit jet de fluide.

La fonction première du jet de fluide sous pression 22 est de former un barrage de protection contre les projections de particules pour le support en forme de lame lors de la progression de celui-ci dans la saignée d'oxycoupage 1.3. Toutefois, lorsque, comme c'est le cas dans le mode d'exécution de la figure 2, le jet de fluide 22 est projeté obliquement vers le front de saignée 1.4, et de préférence vers la partie inférieure dudit front de saignée, il est intéressant de prévoir que le fluide choisi soit un fluide d'oxycoupage, en particulier de l'oxygène ou un mélange d'oxygène et de gaz combustible. Avec un mélange d'oxygène, on réalise un oxycoupage additionnel de la partie inférieure du front de saignée 1.4, c'est-à-dire celle correspondant au segment ED (E étant le point d'impact du jet contre le front de saignée). Il est cependant avantageux de prévoir, plutôt qu'un jet d'oxygène, un mélange d'oxygène et de gaz combustible capable d'apporter une énergie calorifique additionnelle à cette partie inférieure du front de saignée (segment ED), ce qui augmente ainsi davantage encore les performances de vitesse d'oxycoupage de la pièce en acier à oxycouper. Ainsi, dans ce cas, le jet de fluide sous pression assure à la fois une fonction de protection contre les projections de particules pour le support en forme de lame, et une fonction supplémentaire d'amélioration des performances d'oxycoupage. Cette seconde fonction présente des avantages pratiques considérables, car elle ouvre des perspectives de vitesses d'oxycoupage dépassant largement le double des vitesses classiquement utilisées avec les installations traditionnelles. On a également représenté sur la figure 2 les conduites d'alimentation associées à l'organe de projection 25 (et 25' éventuellement) : on distingue ainsi une conduite 25.1 assurant l'alimentation en oxygène, et une conduite 25.2 assurant l'alimentation en gaz combustible. On a représenté ces deux conduites d'alimentation branchées sur le bloc de support 26, mais il ne s'agit naturellement que d'un mode d'exécution particulier.

On va maintenant se référer à une variante illustrée en figure 3.

Sur cette figure, le bloc 26 est équipé à la fois d'un organe de projection 25' projetant obliquement un jet de fluide 22' vers le front de saignée 1.4 comme cela a été déjà décrit en détail en référence à la figure 2, mais aussi un organe de projection 25" servant à projeter un jet de fluide 22" vers le support en forme de lame 10.1 de l'organe d'ébavurage 10.2 ou vers ledit organe. Ce jet de fluide 22" est également capable d'assurer la fonction de barrage de protection contre les projections de particules pour le support en forme de lame, à condition naturellement que la partie principale dudit support dans la saignée d'oxycoupage soit concernée par le jet 22", c'est-à-dire que le point d'impact noté E" de ce jet soit proche du point C. Il est alors intéressant de choisir le fluide de protection de façon à obtenir une fonction supplémentaire pour le jet projeté vers le support en forme de lame de l'organe d'ébavurage ou vers ledit organe. De préférence, le fluide choisi est un fluide de refroidissement, en particulier de l'eau ou de l'air comprimé. On obtient ainsi un effet de refroidissement du support en forme de lame de l'organe d'ébavurage qui est particulièrement avantageux lorsque l'on réalise un oxycoupage d'une brame chaude, dont la température peut être très élevée comme c'est le cas pour l'oxycoupage de brames chaudes en sortie de coulée continue des aciéries, où les températures avoisinent 1000°C. L'organe de projection de fluide 25" sera également de préférence réglable en inclinaison, et aussi en hauteur par le bloc de support associé 26. Pour ce qui est de l'inclinaison du jet de fluide 22", la plage théorique possible, illustré ici par un angle β, va de la direction allant au point d'impact B au niveau de la face 1.1 de la pièce 1 à une direction verticale. Toutefois, on préférera dans la pratique une plage angulaire plus limitée, allant de la direction joignant un point d'impact E" relativement proche du point C, jusqu'à un point G au niveau de la face inférieure 1.2 de la pièce 1 correspondant à la direction d'un jet venant impacter l'extrémité du support de l'organe d'ébavurage, pour ne pas perturber l'émission du jet d'ébavurage. Ainsi, le jet 22" assure alors une double fonction, qui est à la fois la protection contre les projections de particules pour le support en forme de lame, et le refroidissement dudit support en forme de lame.

Sur la figure 2, on aura compris que le jet de fluide 22 projeté obliquement vers le front de saignée 1.4 forme un barrage contre les projections des particules qui restent alors confinées dans le triangle AFE, sans pénétrer dans la zone trapézoïdale ABCDE. Les particules sont alors renvoyées vers la pointe inférieure du triangle, pour être enfin éjectées au niveau de la sortie du jet de coupe, c'est-à-dire au niveau du point D. Cet effet est doublé ou triplé si on utilise d'autres jets complémentaires qui vont progressivement confiner les particules contre le front de saignée, avant l'éjection finale de celles-ci. Dans le cas de la figure 3, on retrouve le même effet de rideau confinant les particules dans le triangle A' E' F grâce à l'action du jet de fluide 22' qui est projeté obliquement vers le front de saignée 1.4. Le jet de fluide 22" forme lui aussi un rideau de protection, qui peut être utilisé seul ou en combinaison avec le rideau précédent constitué par le jet 22', en confinant les quelques particules dans la zone à cinq côtés délimitée par les points A', A", E", C, D, E'. En outre, la zone triangulaire délimitée par les points A", E", B est pleinement concernée par l'action de refroidissement exercée sur le front amont du support en forme de lame.

Ainsi qu'on l'aura compris, dans tous les cas, les jets de protection 22,22',22" sont émis à partir d'organes de projection qui sont déplacés horizontalement en synchronisme avec les organes de coupe, d'ébavurage et de pulvérisation, l'ensemble des jets 6,12,13,22,22',22" restant dans un même plan vertical au cours du processus d'oxycoupage. Ce plan d'ensemble n'est autre que le plan médian de la saignée 1.3.

Enfin, ainsi que cela est visible sur la figure 3, on a représenté non seulement les conduites d'alimentation 25.1, 25.2 respectivement en oxygène et en gaz combustible, associées à l'organe de projection 25', qui dirige un jet 22' vers le front de saignée 1.4, mais aussi une conduite d'alimentation en fluide de refroidissement 25.3 qui est associée à l'organe de projection 25" émettant un jet 22" dirigé vers le support en forme de lame de l'organe d'ébavurage ou vers ledit organe.

La figure 4 montre, en vue en bout, le support en forme de lame des organes d'ébavurage et de pulvérisation. On notera que ces organes sont dimensionnés en épaisseur pour pouvoir pénétrer dans la saignée d'oxycoupage 1.3 si on souhaite une rétraction verticale vers le haut desdits organes. Dans la pratique, on pourra réaliser une lame mince dont l'épaisseur est de l'ordre de 4 mm, ce qui correspond environ à la moitié de la largeur traditionnelle d'une saignée d'oxycoupage.

En effet, pour occulter les obstacles de parcours qui pourraient être situés sous la pièce en acier à oxycouper, et surgissant lors de l'avancement de l'équipage d'oxycoupage, il est intéressant de pouvoir rétracter verticalement, temporairement, le support en forme de lame des organes d'ébavurage et de pulvérisation. Il est alors intéressant d'organiser le montage de telle façon que le support en forme de lame des organes d'ébavurage et de pulvérisation soit rétractable verticalement vers le haut, afin de pouvoir le masquer à l'intérieur de la saignée 1.3.

On peut d'ailleurs prévoir de retirer les organes précités totalement de la saignée, jusqu'à disparition de l'obstacle sous-jacent. Dans ce cas, il est préférable de ne pas perturber l'espace intérieur de la saignée d'oxycoupage par le jet d'ébavurage, de sorte qu'il est intéressant de pouvoir retirer totalement le support en forme de lame. Il est alors intéressant de prévoir une articulation au niveau du bloc 16 permettant un pivotement autour d'un axe horizontal amenant les jets d'ébavurage et de pulvérisation dans un plan horizontal une fois que les organes correspondants d'ébavurage et de pulvérisation 10.2, 11.2 ont été complètement retirés de la saignée d'oxycoupage 1.3. Dans la pratique, lors de la rétraction de l'organe d'ébavurage, l'alimentation en oxygène du jet d'ébavurage sera coupée en même temps que celle du chalumeau d'oxycoupage vertical. On a illustré une telle possibilité sur la figure 6. On distingue en effet la nouvelle position du support en forme de lame des organes d'ébavurage et de pulvérisation qui est amené dans un plan horizontal, c'est-à-dire parallèle à la face supérieure de la pièce à oxycouper. De ce fait, on aperçoit sur la figure 6 les moyens servant à projeter au moins un jet de fluide directement dans la saignée, lesdits moyens étant en effet agencés en amont de la lame de support.

Le détail de la figure 5 illustre enfin la structure du support en forme de lame, avec ses passages intérieurs concernant d'une part le passage du fluide de refroidissement et d'extinction des fumées associé à l'organe de pulvérisation 11, et d'autre part le passage de l'oxygène d'ébavurage associé à l'organe d'ébavurage 10.

On est ainsi parvenu à réaliser un procédé et un dispositif d'oxycoupage permettant à la fois un traitement efficace du cordon de soudage et une réduction des fumées émises, et aussi une protection efficace contre tout risque d'obstruction par des particules au regard de la lame support passant dans la saignée d'oxycoupage, ce qui permet de très hautes vitesses de fonctionnement. En outre, le jet de fluide peut être utilisé pour une fonction supplémentaire d'augmentation des performances d'oxycoupage en cas de projection sur le front de saignée, ou de refroidissement de la lame en cas de projection vers celle-ci.

L'invention n'est pas limitée aux modes de réalisation qui viennent d'être décrits, mais englobe au contraire toute variante reprenant, avec des moyens équivalents, les caractéristiques essentielles énoncées plus haut.

En particulier, bien que l'on ait décrit un dispositif de mise en oeuvre comportant un chariot unique portant l'ensemble des organes de coupe, d'ébavurage, de pulvérisation et de projection, on pourra bien entendu prévoir un chariot séparé pour l'organe de coupe, à condition toutefois de faire en sorte que les deux chariots soient alors déplacés en parfait synchronisme sur leurs rails de support associés. Enfin, on pourra prévoir tout dispositif de réglage positionnel qui serait évident pour l'homme de métier, servant à adapter le dispositif de mise en oeuvre à tout type de pièce à oxycouper.

## Revendications

1. Procédé d'oxycoupage d'une pièce d'acier, dans lequel on déplace en synchronisme d'une part un organe de coupe (5) de façon que le jet d'oxycoupage (6) soit dirigé vers une première face (1.1) de la pièce (1) pour attaquer ladite face selon une direction sensiblement verticale en formant une saignée (13), et d'autre part un organe d'ébavurage (10.2) et un organe de pulvérisation (11.2) de façon que leurs jets respectifs (12 ; 13) soient dirigés vers une seconde face (1.2) de la pièce opposée à la première face, en attaquant ladite seconde face selon une direction oblique au niveau de la sortie du jet d'oxycoupage (6), afin de réaliser une ébavuration simultanée du cordon de coupe se formant sur ladite seconde face et une réduction des émissions de fumées, lesdits organes d'ébavurage et de pulvérisation étant portés par un support en forme de lame (10.1, 11.1) passant dans la saignée d'oxycoupage (1.3), **caractérisé en ce qu'**on projette, directement dans la saignée d'oxycoupage (1.3) et dans la partie de celle-ci qui est entre le front de saignée (1.4) et le support en forme de lame (10.1, 11.1), au moins un jet de fluide sous pression (22,22',22") formant barrage de protection contre les projections de particules pour ledit support en forme de lame lors de la progression de celui-ci dans la saignée d'oxycoupage (1.3).

2. Procédé selon la revendication 1, **caractérisé en ce qu'**au moins un jet de fluide (22,22') est projeté obliquement vers le front de saignée (1.4), et de préférence vers la partie inférieure dudit front de saignée.

3. Procédé selon la revendication 2, **caractérisé en ce que** le fluide choisi est un fluide d'oxycoupage, en particulier de l'oxygène ou un mélange d'oxygène et de gaz combustible.

4. Procédé selon la revendication 1, **caractérisé en ce qu'**au moins un jet de fluide (22") est projeté vers le support en forme de lame (10.1) de l'organe d'ébavurage (10.2) ou vers ledit organe.

5. Procédé selon la revendication 4, **caractérisé en ce que** le fluide choisi est un fluide de refroidissement, en particulier de l'eau ou de l'air comprimé.

6. Procédé selon l'une des revendications 1 à 5, **caractérisé en ce que** le ou les jets de protection (22,22',22") sont émis à partir d'un ou plusieurs organes de projection (25,25',25") déplacés horizontalement en synchronisme avec les organes de coupe, d'ébavurage et de pulvérisation (5,10.2,11.2), l'ensemble des jets (6 ; 12 ; 13 ; 22,22',22") restant dans un même plan vertical.

7. Dispositif de mise en oeuvre du procédé d'oxycoupage selon l'une des revendications 1 à 6, du type comportant un chariot (2) déplaçable horizontalement sur des rails associés en surplombant la pièce (1) à oxycouper, ledit chariot portant un support en forme de lame (10.1,11.1) agencé pour passer dans la saignée d'oxycoupage (1.3) et supportant inférieurement des organes d'ébavurage et de pulvérisation (10.2,11.2) passant sous ladite pièce, **caractérisé en ce que** le chariot précité (2) supporte également au moins un organe de projection (25,25',25") surplombant la pièce (1) à oxycouper et agencé en amont du support en forme de lame (10.1, 11.1) par référence au sens de déplacement du chariot porteur (2) pour projeter un jet de fluide sous pression (22,22',22") directement dans la saignée d'oxycoupage (1.3).

8. Dispositif selon la revendication 7, **caractérisé en ce que** le chariot porteur (2) porte également un support (7) d'un organe de coupe (5) surplombant la pièce (1) à oxycouper, ledit organe de coupe étant agencé en amont dudit au moins un organe de projection (25,25',25") pour projeter un jet d'oxycoupage (6) attaquant verticalement la face supérieure de ladite pièce en formant la saignée d'oxycoupage (1.3).

9. Dispositif selon la revendication 7 et la revendication 8, **caractérisé en ce que** les supports des différents organes de coupe, d'ébavurage, de pulvérisation et de projection (5 ; 10.2 ; 11.2 ; 25,25',25") sont agencés de telle façon que l'ensemble des jets émis par lesdits organes restent dans un même plan vertical.

10. Dispositif selon l'une des revendications 7 à 9, **caractérisé en ce que** le ou les organes de projection de fluide (25,25',25") sont réglables en hauteur et/ou en inclinaison.

11. Dispositif selon la revendication 10,
**caractérisé en ce que** le ou les organes de projection (25,25',25") sont réglés en position de telle façon que le ou les jets émis soient dirigés soit vers le front de saignée (1.4), soit vers le support en forme de lame (10.1) de l'organe d'ébavurage (10.2) ou vers ledit organe.

12. Dispositif selon la revendication 11,
**caractérisé en ce que** le ou les organes de projection (25,25',25") sont raccordés à des sources de fluides d'oxycoupage (25.1,25.2) pour une projection vers le front de saignée (1.4), ou à des sources de fluides de refroidissement (25.3) pour une projection vers le support en forme de lame (10.1) de l'organe d'ébavurage (10.2) ou vers ledit organe.

13. Dispositif selon l'une des revendications 7 à 12, **caractérisé en ce que** le support en forme de lame des organes d'ébavurage et de pulvérisation (10.2, 11.2) est rétractable verticalement vers le haut, lesdits organes étant en outre dimensionnés en épaisseur pour pouvoir pénétrer dans la saignée d'oxycoupage (1.3).

14. Dispositif selon la revendication 13,
**caractérisé en ce que** le support en forme de lame (10.1, 11.1) des organes d'ébavurage et de pulvérisation comporte une articulation (16) permettant un pivotement autour d'un axe horizontal amenant les jets d'ébavurage et de pulvérisation (12,13) dans un plan horizontal une fois que les organes correspondants d'ébavurage et de pulvérisation (10.2,11.2) ont été complètement retirés de la saignée d'oxycoupage (1.3).
